Europäisches Patentamt

European Patent Office

Office européen des brevets

(11) Publication number: **0 301 895**
**A1**

(12) # EUROPEAN PATENT APPLICATION

(21) Application number: **88307033.6**

(22) Date of filing: **29.07.88**

(51) Int. Cl.⁴: **F 16 L 55/16**

(30) Priority: **31.07.87 GB 8718212**

(43) Date of publication of application:
**01.02.89 Bulletin 89/05**

(84) Designated Contracting States:
**AT BE CH DE ES FR GB GR IT LI LU NL SE**

(71) Applicant: **ANGUS FIRE ARMOUR LIMITED**
**Bentham**
**Lancaster LA2 7NA (GB)**

(72) Inventor: **Sheard, Dennis Richard**
**Brackenber House Brackenber Lane Giggleswick**
**Settle North Yorkshire BD24 0EB (GB)**

(74) Representative: **Brooke-Smith, Fred et al**
**STEVENS, HEWLETT & PERKINS 5 Quality Court**
**Chancery Lane**
**London WC2A 1HZ (GB)**

(54) Methods of lining tubular objects.

㉗ In a method of lining a pipe (12) internally by eversion of a tubular liner (10), the liner is presented at the eversion point in a collapsed form of cross-section having at least two re-entrants. For this purpose the liner (10) is either fed in the collapsed form into the pipe (12) from the upstream end of the pipe or is shaped into the required collapsed form by forming means disposed within the pipe (12).

FIG.1

**Description**

# METHODS OF LINING TUBULAR OBJECTS

This invention relates to methods of lining tubular objects, and more particularly to methods involving eversion of a tubular liner. These methods are now well-known in the art and have many industrial applications, notably in the insertion of linings into existing pipes, for example for renovating supply lines for liquids, especially water, and gases.

The description which follows makes reference to the accompanying diagrammatic drawings in which:

Figure 1 illustrates three known forms of the eversion process,

Figure 2 illustrates one form of a liner in its shapes before and after eversion, and

Figure 3 to 7 respectively show 5 forms of liner which can be used in methods according to the invention.

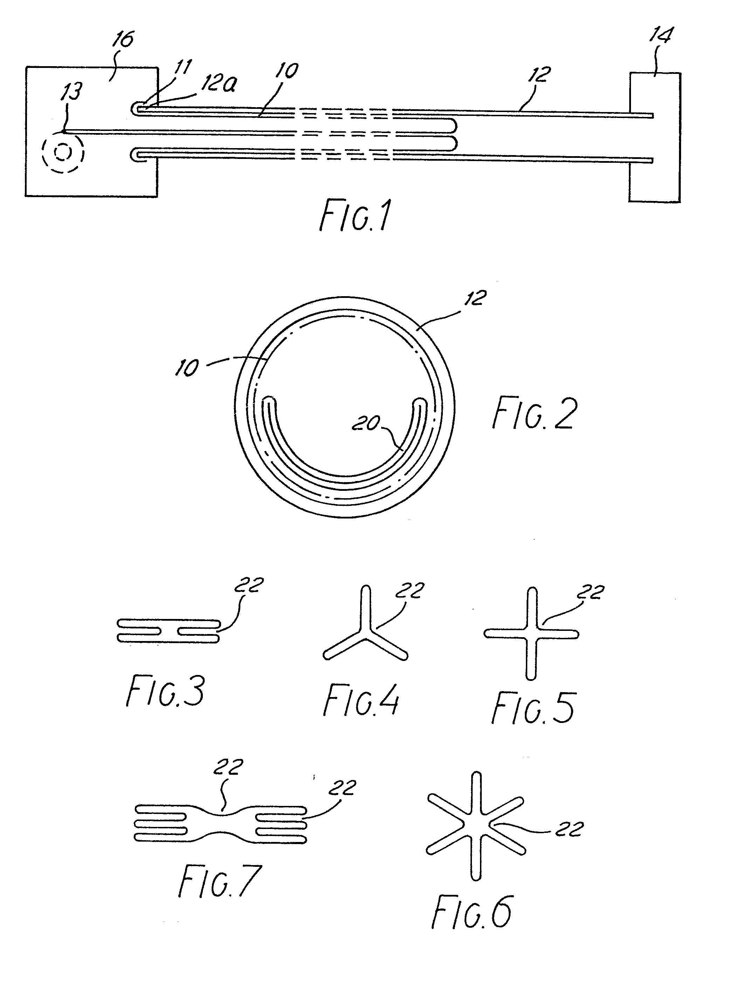

In one known eversion method (see Figure 1) a tubular plastics lining 10 is inserted by sealing one end 11 of the lining with respect to one end 12a of a conduit 12, the other end 13 of the lining being sealed, and applying vacuum to the other end of the conduit by means of a vacuum chamber 14, so that the lining is drawn into the conduit and is turned inside out as it progresses along the conduit, thus providing the conduit with a lining of plastics material.

In another known similar eversion method, external pressure is applied via a pressure chamber 16 to the outside of a plastics tube which is connected and sealed to the exposed conduit end 12a to cause it to evert into the conduit. This method also allows the everting end of the lining to apply an adhesive between the tube and the conduit walls in order to cause the lining to adhere to the inside wall of the conduit. Hydrostatic water pressure has also been proposed as a means of producing eversion of a tubular lining.

One problem which arises when it is required to re-line long lengths of conduit with a flexible tubular lining is that the force or pressure required to effect eversion can be large and to this end, textile reinforced linings have proposed, the textile reinforcement bearing the longitudinal strain required to overcome frictional forces in pulling the lining through itself during eversion and the strains which occur at the turning point where the hose is everting. Circumferentially extending yarns in the reinforcement assist in containing the pressure. Further to assist eversion, the use of a cord or belt 18, passing through the lining to the point of eversion point and then to a winch has been proposed. Application of tension and pulling the belt or cord thus assists the everting pressure applied and facilitates eversion. This is particularly useful if it is required to reline conduits which have bends or dislocations.

Thus, the effectiveness of eversion processes as used for re-lining conduits, as judged for example by the length of conduit which can be re-lined from a single end-access point, is very largely dependent on the pneumatic, hydraulic or tensile forces required to evert long lengths of flexible lining into the conduit.

A second problem associated with eversion processes concerns the probability of mechanical damage to the lining materials during the eversion process itself.

In methods currently in use, the flexible lining tube is contained on a reel, on which it is wound in a lay-flat state. The flexible lining tube is sealed at the inside end of the reel coil, and is joined in sealing condition to one end of the conduit, or to an extension thereof, and pressure is applied to the outside of the tube to cause it to evert into the conduit, assisted in some cases by a tension belt within the lining, helping to pull it into the conduit.

The lining thus begins to evert into the conduit, passing down the conduit in an essentially lay-flat state. However, since the lay-flat width of the tube is a dimension $\dfrac{\pi \times D}{2}$, which is greater than the diameter of the tube, that part of the tube which is passing towards the point of eversion takes up a C-shaped cross-section as shown at 20 in Figure 2. At the point of eversion, the cross-section of the lining eventually becomes O-shaped, i.e. the profile of the conduit as shown in chain lines. In turning inside out and changing cross section, the lining surface is contorted into complex geometric shapes. This process firstly requires high mechanical force, as discussed above, and secondly means that high local stresses and srtains are applied to the lining surface at the point of eversion, in order that eversion can continue. Such high strains and stresses can cause damage to the material or the lining , e.g. by tearing it or causing it to develop leaks, or, in the case of textile reinforced linings, it can result in delamination in the lining layers. Such damage may be disastrous, particularly in the case of linings caused to adhere to the conduit wall, because of single major fault or leak may necessitate complete replacement of the length of lining used in the conduit.

According to this invention there is provided a method of lining a tubular object internally by eversion of a tubular liner within the object comprising presenting the liner, at the eversion point, in a collapsed from whereof the cross-section has at least two re-entrants.

According to a preferred feature of the invention the re-entrants extend substantially radially towards the centre of the section.

The liner may be shaped into said cross-sectional form during its passage to the eversion point, but it is preferred that the liner should be moulded in said form prior to being fed along the tubular object to the eversion point.

We have found that a very important factor which can give rise to the need for high differential pressures or tensions in everting flexible lining tubes into conduits, and to consequential damage of the lining during the eversion process, is the cross-sectional shape of the lining as it approached the eversion point.

By changing the lining cross-section from the lay-flat configuration (or C-shaped section as described above) before it reaches the turning (eversion) point to a cross-section having at least two geometric re-entrant surfaces, we have found that the forces required to cause eversion are dramatically reduced, the contortion of the lining at the eversion point is lessened, and the risk of damage to the lining caused by contortion and abrasion is greatly reduced.

Consequently, linings which are everted in this manner require lower forces, can be applied to longer conduits and are much less prone to irreparable damage through delamination or leakage.

The linings used to re-line conduits by known eversion processes may contain a textile reinforcement and an impervious elastomeric, plastic or rubber material on at least one side of the said reinforcement and may also contain to carry an adhesive used to cause the lining to adhere to said conduit after inserting by eversion.

Figures 3 to 7 show various forms of lining having two or more re-entrants. Thus the lining shown in Figure 3 has two re-entrants 22, that shown in Figure 4 has three entrants 22, that shown in Figure 5 has four re-entrants 22, and that shown in Figure 6 has six re-entrants 22, all of which re-entrants are directed towards the geometric centre of the section. The lining shown in Figure 7 has six re-entrants all directed at right angles to the general plane of the collapsed lining for ease of coiling the lining for storage.

The lining may be formed into the said cross-sectional form at any point or stage before it reaches the point of eversion. Thus, for example, the lining may be handled in a lay-flat condition before everting into the conduit, but by means of appropriately shaped and positioned guides or wheels it can be pressed into the required cross-sectional shape at any point between the delivery container (reel) and the eversion point. Whilst such re-shaping of the cross-section is fully possible, it is made difficult in eversion systems based on fluid pressure or vacuum because the excess pressure on the outside of the lining approaching the eversion point causes the lining to be in a collapsed, pressurized condition which makes it more difficult to introduce new longitudinal folds to produce the re-entrants. More effectively, the required lining cross-section is achieved by forming the lining into the required cross-section before differential pressure is applied to cause assist eversion. Thus, for example in the case of an extruded flexible lining, the required cross-section can be produced by the shape of the extrusion dies.

If the lining contains a textile reinforcement having coatings of fluid impervious plastics or elastomeric material on at least one face of the reinforcement, the required profile can be formed by appropriate guides or forming wheels applied to the reinforcement or coated tubular object either before or after the coating process.

Alternatively, the lining may be formed in, for example, a lay-flat form in the initial manufacturing process, but converted into the defined cross-section in a second process.

In manufacturing linings having the defined cross-sectional form prior to their application in eversion processes, it is preferable that said linings exhibit a natural tendency to retain this cross-section whilst being handled and transported; for example whilst being flaked, coiled, wound onto drums or reels etc. This property is readily achieved, for example by submitting the pre-profiled linings to heat, steam, radiation, or other energising processes well known in the art, in association with the profile forming processes.

Thus, by way of a specific example, a lining comprising a textile reinforcement, coated with a thermoplastic elastomer may be made by a coating process. After coating, and whilst the elastomer is still in a plastic condition, the lining may be fed through guides which profile it into, for example, an H-shaped cross-section having two re-entrants as shown in Figure 3, after which it is coiled in that shape. When wound onto reels, the shape is maintained and is still retained when the lining is wound onto the drum in a pressurised eversion machine. When attached to the conduit, application of external pressure causes eversion to start, and the excess pressure also serves to ensure maintenance of the desired lining cross-section as it travels through already everted lining to the eversion point.

## Claims

1. A method of lining a tubular object internally by eversion of tubular liner within the object comprising presenting the liner, at the eversion point, in a collapsed form whereof the cross-section has at least two re-entrants, the liner being either fed in said collapsed form into the tubular object or being shaped into said tubular form upstream of the eversion point by forming means engaging the surface of the liner which becomes the radially inner surface of the liner after eversion.

2. A method as claimed in claim 1, wherein the re-entrants extend substantially radially towards the centre of the section.

3. A method as claimed in 1, wherein, prior to being fed into the tubular object, the liner is carried in lay-flat form on a reel, the re-entrants being directed towards a plane of symmetry of the liner section which plane extends at right angles to the general plane of the lay-flat form.

4. A method as claimed in any one of claims 1 to 3, wherein the liner is moulded in said form prior to being fed along the tubular object to the eversion point.

0301895

FIG.1

FIG.2

FIG.3

FIG.4

FIG.5

FIG.7

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 297 378  (MASUDA SENICHI) * figures 2,6; claim 1 * | 1,2 | F 16 L  55/16 |
| A | --- | 3,4 | |
| A | EP-A-0 082 212  (INSITUFORM INTERNATIONAL INC.) * claims * | 1 | |
| A | DE-A-2 912 840  (G. MUSCIANESE et al.) * claims 1,5; figure 6 * | 1,3 | |
| A | DE-A-2 718 877  (SÜROWA) * figure 1 * | 1,3 | |

| | | | TECHNICAL FIELDS SEARCHED (Int. Cl.4) |
|---|---|---|---|
| | | | F 16 L  55/00 |

The present search report has been drawn up for all claims

| Place of search | Date of completion of the search | Examiner |
|---|---|---|
| BERLIN | 16-09-1988 | SCHAEFFLER C.A.A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P0401)